# EUROPEAN PATENT SPECIFICATION

(11) **EP 2 683 773 B1**
(45) Date of publication and mention of the grant of the patent: **06.07.2016**
(21) Application number: 12710776.1
(22) Date of filing: 09.03.2012
(51) Int. Cl.: C08L 67/02, B65D 65/46, C08L 67/04

(54) **BIODEGRADABLE POLYMER BLEND**
BIOLOGISCH ABBAUBARE POLYMERMISCHUNG
MÉLANGE DE POLYMÈRES BIODÉGRADABLE

(30) Priority: 09.03.2011 GB 201104018
(43) Date of publication of application: 15.01.2014
(73) Proprietor: Floreon-Transforming Packaging Limited, Hull, East Yorkshire HU5 1SG (GB)
(72) Inventor: BAILEY, Peter, Bradby, Spiros, Hull East Yorkshire HU5 1SG (GB); HODZIC, Alma, Sheffield South Yorkshire S1 3JD (GB); HAYES, Simon, Antony, Sheffield South Yorkshire S1 3JD (GB)
(74) Representative: Neilson, Martin Mark
(86) International application number: PCT/GB2012/050525
(87) International publication number: WO 2012/120309

(56) References cited:
- EP-A1- 0 890 614
- US-A- 5 883 199
- US-A1- 2007 027 255
- US-B1- 6 197 860
- DATABASE WPI Week 200603 Thomson Scientific, London, GB; AN 2006-023924 XP002692236, & JP 2005 335095 A (MITSUBISHI PLASTICS IND LTD) 8 December 2005 (2005-12-08)
- DATABASE WPI Week 200916 Thomson Scientific, London, GB; AN 2009-E13756 XP002692237, & JP 2009 013407 A (MITSUBISHI PLASTICS IND LTD) 22 January 2009 (2009-01-22)

## Description

The present invention relates to a biodegradable polymer blend and in particular a polyester based blend comprising polylactic acid (PLA).

Polylactic acid (PLA) is a synthetic thermoplastic polyester, now readily available in large volumes, used primarily for packaging applications. It has desirable environmental credentials, as it is readily produced from sustainable (plant) feedstock, with lower carbon footprint and non-renewable energy usage than any mineral thermoplastic, including 100% recycled PET. In principle PLA can be recycled either by thermoplastic methods or by hydrolytic cracking back down to monomer, although at present this is still only in commercial development. Furthermore, the original commercial strength of PLA remains in its moderately rapid biodegradation, by a two stage process consisting of hydrolysis to low molecular weight oligomers, followed by complete digestion by microorganisms.

At room temperature PLA has high modulus and high strength, but very poor toughness. This is due largely to its glass transition point which lies between 50°C and 60°C. In certain applications this presents further problems due to deformation and loss in strength under storage conditions in warmer climates. Solutions to these problems do exist by control of polymer chemistry, producing copolymers and branched chains. With a remit of producing a tougher, yet commercially viable thermoplastic which would still be biodegradable in a similar manner, various approaches have been examined based on thermoplastic compounding or blending.

Many researchers have examined the potential for nanoparticulate reinforcement of PLA, with various objectives and degrees of success. Of relevance is work on nanoscale biologically derived reinforcements, for example cellulose nano-whiskers [Bondeson D., Oksman K.,: "Polylactic acid/cellulose whisker nanocomposites modified by polyvinyl alcohol". Composites: Part A, 38, 2486-2492 (2007)]. A majority of work on PLA nanocomposites has focused on improving strength and modulus. However, for many thermoplastic applications this is largely irrelevant. Previous workers have also noted that limited dispersion of inorganic nanoparticles has been shown to give considerable improvement in toughness [Jiang L., Zhang J., Wolcott M.P., "Comparison of polylactide/nano-sized calcium carbonate and polylactide/montmorillonite composites: Reinforcing effects and toughening mechanisms". Polymer, 48, 7632-7644 (2007)]. While not strictly biodegradable, many inorganic nanoparticles are produced directly from mineral sources and may be deemed inert when the surrounding polymer has broken down. However, inorganic nanoparticles are generally recognised as requiring an organic surface modification to render them compatible with thermoplastics. Current commercially available materials are supplied with a thick layer of organic modifier which is not biodegradable, and may partially dissolve in the matrix polymer causing concerns for food contact materials. Finally, commercial supplies of nanoparticulates are so expensive that they prohibit the use of any prospective composite for bulk applications such as packaging.

A more promising avenue of investigation lies in blending other thermoplastics with PLA. Specific additives for PLA are already available, based on non-biodegradable, mineral based thermoplastics. Researchers examining routes to produce a more compliant polymeric material have examined the effects of fairly large volume fractions of other biodegradable polyesters [Todo M., Park S.-D., Takayama T., Arakawa K., "Fracture micromechanisms of bioabsorbable PLLA/PCL polymer blends". Engineering Fracture Mechanics 74, 1872-1883 (2007); Wang R., Wang S.,, Zhang Y., "Morphology, Mechanical Properties, and Thermal Stability of Poly(L-lactic acid)/Poly(butylene succinate-co-adipate)/Silicon Dioxide Composites". Journal of Applied Polymer Science, 113, 3630-3637 (2009); Jiang L., Zhang J., Wolcott M.P., "Study of Biodegradable Polylactide/Poly(butylene adipate-co-terephthalate) Blends". Biomacromolecules, 7, 199-207 (2006)]. All have observed phase separation in the blended material and other workers [Wang R., Wang S., Zhang Y., Wan C., Ma P., "Toughening Modification of PLLA/PBS Blends via in situ Compatibilization"] have demonstrated that compatibilisers can successfully be used to control the domain size of the minor phase, if necessary, to improve performance. Considering an analogy to structural thermosetting resins, which also generally operate in their glassy state, a small addition of a more compliant polymer can greatly improve toughness. Many commercial epoxy resins incorporate a rubber or thermoplastic which produces phase separated globules in the cured material. Certain literature [Smith R., "Biodegradable Polymers for Industrial Applications" (2000) CRC Press ISBN 0-8493-3466-7] claims that most of the biodegradable polyesters are in fact completely miscible with PLA and though this seems improbable, it does not dispute the potential improvements in toughness.

Additionally, the patent literature includes a number of disclosures that describe multicomponent PLA based degradable resins and examples include US 5,883,199; US 2005/0043462; US 2005/0288399; US 2008/0041810 and US 2010/0086718.

However, there remains a need for a PLA based biodegradable blend suitable for manufacturing degradable articles such as bottles and the like having improved mechanical, physical, chemical and thermal properties so as to be energy efficient during processing of the blend to the finished article and to provide a finished article of the required durability including in particular toughness. Of course, durability or toughness does need to be optimised against those properties responsible for timely degradation of the blend given the overriding objective to provide a fully biodegradable and in particular compostable article.

Accordingly, the inventors provide a fully degradable and a compostable polyester based blend that is free from non-degradable organic or inorganic additives such as nucleating agents and the like. Accordingly, the present blend does not require secondary processing that would otherwise be required. The present blend and the associated methods of manufacture and moulding are therefore very energy efficient and environmentally friendly.

The thermal properties of the present blend are configured for optimised flow rate during process moulding to firstly extend the range of type and sizes of articles that may be moulded and secondly to improve processing efficiency with regard to time and energy consumption. Accordingly, the present blend comprises a 'flow rate enhancing component' being a relative low molecular weight biodegradable polyester. The present blend is also configured to provide a resultant moulded article having the appropriate mechanical, physical and chemical properties including greatly improved toughness over existing PLA based blends. This is achieved by incorporating a 'toughening component' within the blend being a relatively high molecular weight component relative to the flow rate enhancing component.

By selectively configuring the relative concentrations of the components and the type of components, the inventors provide a formulation having certain optimised properties. These include in particular: i) a required melt flow rate and macroscopic viscosity during processing; ii) a resulting moulded article with a required toughness and a tailored degradation rate so as to provide a desired shelf-life whilst being fully degradable and in particular compostable, following use.

According to a first aspect of the present invention there is provided a biodegradable polymer blend comprising: not less than 70% by weight of polylactic acid; between 0.5% to 15% by weight of a first polyester having an average molecular weight of not more than 40,000 and a melt flow rate of greater than 7g/10mins with 2.16kg at 80°C; and between 0.5% to 15% by weight of a second polyester having an average molecular weight greater than that of the first polyester and melt flow rate less than that of the first polyester as described in the present claims.

Preferably the ternary blend comprises not less than 85% PLA, or more preferably not less than 90% by weight PLA. Preferably the blend comprises between 3% to 7% by weight of the first polyester and between 3% to 7% by weight of the second polyester. More preferably the blend comprises approximately 5% by weight of the first polyester and approximately 5% by weight of the second polyester.

Preferably, the first polyester has an average molecular weight of not more than 25,000 or more preferably 15,000. Alternatively the first polyester may have an average molecular weight of not more than 35,000. Preferably, the second polyester has an average molecular weight of not less than 40,000 and more preferably 50,000.

Preferably, the first polyester comprises polycaprolactone (PCL), or a linear polyhydroxy alkanoate (PHA). Additionally, the second polyester may comprise: polybutylene succinate (PBS); polycaprolactone (PCL); polybutylene succinate adipate (PBSA); polybutylene adipate (PBA); polybutylene adipate terephthalate (PBAT).

Preferably, the first and second polyesters are substantially linear polyesters with no or minimal branching of the main polymer backbone, and more preferably no side-groups thereon.

Preferably, the PLA comprises L-polylactic acid, D-polylactic acid or a copolymer of L and D-polylactic acid.

Preferably, the blend comprises a melt temperature in the range 180°C to 220°C.

. Optionally, the first polyester may comprise a viscosity of less than 10 Pa.s at 100°C. Additionally, the melt flow rate of the second polyester may be approximately 3g/10mins at 160°C;2.7g-4.9g/10mins at 190°C or 15g/10mins at approximately 200°C.

Optionally, first polyester may comprise a thermoplastic polyester having a melting point less than 100 °C and preferably less than 60 °C. Optionally, the first polyester may comprise a viscosity less than 40 Pa.s at 100°C Pa.s at a shear rate of 1s⁻¹ and temperature of 180 °C. More preferably, the first polyester may comprise a viscosity less than 5 Pa.s at a shear rate of 1s⁻¹ and temperature of 180 °C.

Optionally, second polyester may comprise a thermoplastic polyester having a melting point less than 160 °C. Optionally, the second polyester may comprise a viscosity greater than 60 Pa.s at a shear rate of 1 s⁻¹ and temperature of 180 °C. More preferably the second polyester may comprise a viscosity greater than 1000 Pa.s at a shear rate of 1s⁻¹ and temperature of 180 °C.

Optionally, the PLA may comprise a melt point being substantially equal to, greater than, or less than approximately 158 °C. Optionally, the PLA may comprise a viscosity being substantially equal to, greater than, or less than 1500 Pa.s at a shear rate of 1s⁻¹ and temperature of 180 °C.

According to a second aspect of the present invention there is provided a biodegradable polymer blend comprising: not less than 70% by weight of polylactic acid; between 0.5% to 15% by weight of a first polyester having a melt flow rate of greater than 7g/10mins with 2.16kg at 80°C; and between 0.5% to 15 % by weight of a second polyester having an average molecular weight greater than the average molecular weight of the first polyester and melt flow rate less than that of the first polyester as described in the present claims.

Preferably, the majority of the blend comprises PLA and the two minor components comprise PCL of relative low molecular weight and PBS as a relative high molecular weight component relative to the PCL. This blend preferably comprises approximately 90% by weight PLA; 5% by weight PCL (at an average molecular weight of 10,000) and 5% by weight PBS (at an average molecular weight of 50,000). Importantly, the inventors have observed a surprising synergy by the addition of the two minor components at their relative concentrations and molecular weights such that an enhanced melt flow rate of the blend is achieved that is greater than the melt flow rates of the three blend components when independent. From experimental investigation, this synergy is thought to arise due to difference in the respective melt flow rates (and the molecular weights) of the first polyester and the combination of PLA with the second polyester.

Preferably, the blend comprises trace levels of additional components and is substantially devoid of non-polyester compounds. Accordingly, any remaining weight % comprises any one or a combination of the three blend components. Preferably, the blend consists of substantially 90% by weight PLA; substantially 5% by weight PCL and substantially 5% by weight PBS.

According to a third aspect of the present invention there is provided an article and in particular a bottle, water bottle, water cooler bottle or container for foodstuffs or beverages comprising a polymer blend as described herein. According to a fourth aspect of the present invention there is provided a cap, lid or spray head for a bottle or container comprising a polymer blend as described herein. The present blend is suitable for the moulding of a plurality of different articles of varying wall thickness via a plurality of different moulding processes with only minor or modest changes to the relative concentrations of the three components and their respective molecular weights. According to a fifth aspect of the present invention there is provided a film; a substantially flexible or rigid planar film; a film sleeve; a document wallet; a packaging film; and/or a sheet comprising the blend as described herein.

According to a sixth aspect of the present invention there is provided a method of manufacturing a biodegradable polymer blend comprising: providing not less than 75% by weight of polylactic acid; blending between 0.5% to 15% by weight of a first polyester having an average molecular weight of not more than 40,000 and a melt flow rate of greater than 7g/10mins with 2.16kg at 80°C with the polylactic acid; blending between 0.5% to 15% by weight of a second polyester having an average molecular weight greater than that of the first polyester and melt flow rate less than that of the first polyester with the polylactic acid and the first polyester.

Preferably, the method of manufacturing the biodegradable article comprises shaping the blend into the article by any one of the following moulding processes: injection moulding; compression moulding; blow moulding; thermal forming; vacuum forming; extrusion moulding and in particular twin screw extrusion; calendaring; polymer draw processes

Optionally, the process further comprises adding less than 1% by weight of carbon or other particulates such as for example titania or silica with strong infrared absorbency prior to the moulding process, in order to facilitate later reheating processes.

Preferably, the PLA, the first and/or second polyesters are homopolymers. Preferably, the PLA, the first and second polyesters are blendable to provide a homogeneous blended phase. Preferably, the PLA is substantially a linear polymer and in particular a linear homopolymer.

Preferably, the present blend and any resulting article manufactured from the blend does not include or is substantially devoid of a compatibilizing agent or surfactant, a reinforcement compound and/or a plasticiser.

Optionally, the present blend and any resulting article manufactured from the blend may comprise a relatively small amount of an additive to affect the physical, mechanical, chemical, electrical and in particular, optical properties. Preferable, the blend comprises an additive, a pigment, a dye included at not greater than 10%, 5% or 2% by weight and optionally less than 1% by weight.

According to the experimental results described herein, improved properties (both in terms of processing and in the final moulded products) are achieved by blending PLA with other biodegradable polyester thermoplastics.

Specific embodiments of the present invention will now be described with reference to examples and the accompanying drawings in which:
figure 1 illustrates mechanical test results for various binary blends based on 95% by weight PLA with the 5% by weight polyester additive;
figure 2 is a photograph illustrating melt flow behaviour of specimens of the binary blends of figure 1;
figure 3 is a summary of the mechanical and thermal test results for the different binary blends of figure 1;
figure 4 illustrates scanning electron micrographs of the binary blends of figure 1;
figure 5 is a graph of the storage modulus and tan δ for the different binary blends of figure 1;
figure 6 is a graph of the loss modulus for the different binary blends of figure 1;
figure 7 is a graph of the storage modulus verses temperature for pure PLA at three different frequencies;
figure 8 is a graph of crystallisation tests of various ternary blends according to specific examples of the present invention;
figure 9 illustrates failure strain and melt flow results for ternary blends of figure 8;
figure 10 is a 3D representation of the melt flow results for the ternary blends of figure 9.

Blending of PLA with other commercially available biodegradable polymers was investigated via two and three component blend formulations.

### Raw Materials and Compositions

Blends were based on Natureworks Ingeo 7000D grade polylactic acid (PLA).

For the minor phase, four types of commercial biodegradable polymer were selected, of which two were available in significantly different grades:
Polyhydroxybutyrate-co-valerate (PHBV) was obtained from Sigma Aldrich Ltd, composition typically 8% valerate (this material is available in bulk quantities from Biomer).
Polycaprolactone (PCL) was obtained from Perstorp Caprolactones, in two grades: Capa 6100, mean molecular weight 10000 (designated l-PCL); Capa 6800, mean molecular weight 80000 (designated h-PCL).
Polybutylene succinate (PBS) was obtained from Zhejiang Hangzhou Xinfu Pharmaceutical Co. Ltd in two grades: Biocosafe 1903, pure PBS for injection moulding (designated h-PBS) with average molecular weight 50,000 and; Biocosafe 2003, modified PBS for film blowing (designated l-PBS).
Polybutylene adipate-co-terephthalate (PBAT) was obtained from BASF; tradename Ecoflex grade FBX7011.

All measurements reported and discussed herein were made on material dried in a manner which should result in less than 200ppm moisture content.

### Binary Blends

To investigate the physical and mechanical properties of adding various additional polyester components to PLA the following binary blends were investigated:
1. PLA at 90% by weight and PHBV at 5% by weight;
2. PLA at 90% by weight and h-PCL at 5% by weight;
3. PLA at 90% by weight and l-PCL at 5% by weight;
4. PLA at 90% by weight and h-PBS at 5% by weight;
5. PLA at 90% by weight and -PBS at 5% by weight;
6. PLA at 90% by weight and PBAT at 5% by weight.

Test data was for blends of PLA with each of the six additives. Pure PLA reference material (designated PLA0) was also investigated under the same compounding process to ensure a calibrated comparison with pure material subject to the same thermal and shear history.

### Compounding and Moulding

Raw materials were dried in a vacuum oven at 50°C for a minimum of 5 days prior to compounding. Batches of 150g were weighed into sealable bags and tumble mixed prior to compounding.

Blending was conducted using a Prism twin screw extruder with counter rotating 250mm screws, 16mm in diameter, with a diameter ratio of 15. Screw speed was set at 100rpm. For all blends the following temperature profile was utilised: feed section 160°C, mixing section 190°C, metering section at 185°C. The compounded polymers were drawn off as thick filament, cooled in a water bath, and chopped to produce a fine moulding chip, which was collected then immediately dried in a vacuum oven.

For mechanical and dynamic tests, standard dumb-bell specimens were injection moulded with a gauge length of 25mm; cross section 2mm x 4mm. A Haake Minijet II injection moulder was used, with a barrel temperature of 215°C, nozzle pressure of 600bar, and mould temperature of 40°C. A typical charge of 6.2g provided sufficient material to mould 3 specimens and took 5 minutes to melt.

Moulded specimens were aged prior to test for 5 days in ambient conditions of 45 ± 5 %RH at 22 ± 2°C.

### Mechanical and Dynamic Testing

Tensile tests were conducted at a crosshead speed of 50mm/minute, on a minimum of 5 specimens per composition.

Dynamic mechanical thermal analysis (DMTA) was performed between room temperature and 150°C using a Perkin Elmer DMA8000, running a temperature ramp rate of 2°C/minute. Dual cantilever specimen geometry was used with free length of 5mm, using the gauge section of injection moulded specimens as detailed above. Glass transition was determined as the onset of the drop in storage modulus. This gives a worst case value of the temperature at which significant deformation may start to occur under load, for most applications.

To examine the effect of the second phase on post-crystallisation of PLA, the DMTA test was repeated on specimens which were heat treated to induce maximum crystallisation. Specimens were placed in an air circulating oven at 100°C for one hour, then removed and allowed to cool to room temperature before cropping and loading into the instrument.

### Melt Flow Assessment

Melt flow rheometry was conducted using an adaptation of the Haake Minijet II, using its standard die: diameter 4mm, length 18mm. Applied force was measured for constant piston speed of 400mm/minute at 190°C. Taking the steady state load from this test, the Hagen-Poisselle equation for fluid flow through a pipe was used to estimate the steady state flow at a fixed load of 21.6N in the shorter, narrower die (diameter 2.095mm, length 8mm) as specified by BS EN ISO 1133. This is only an approximate conversion since end effects cannot be easily accounted for, nor can the compressibility and potential turbulence of the melt. However this approach did provide usefully comparable figures, which were approximately commensurate with the manufacturer's specification for pure PLA.

### Electron Microscopy of Phase Structure

Specimens were prepared by cryofracture after cooling in liquid nitrogen, again using the gauge section of injection moulded dumb-bells. The specimens were mounted on an aluminium stub using epoxy resin and sputter coated with gold. While the coating was detrimental to the size of features which can be observed, this was necessary to prevent the build up of surface charge, as well as ablation or volatilisation from the surface. An Inspect field emission gun secondary electron microscope (FEGSEM) was used to examine the samples, providing typical resolution of 10nm.

### Tensile Test Results

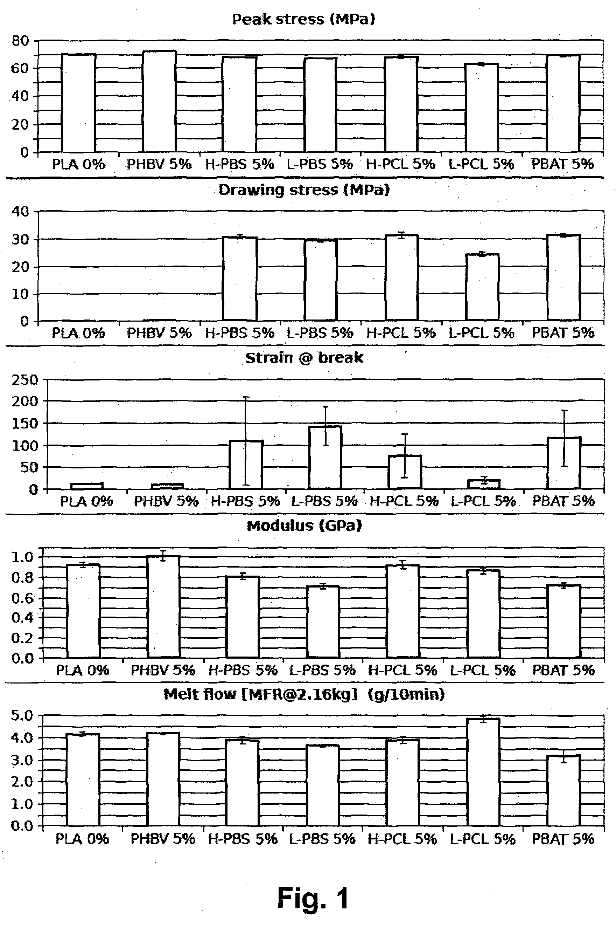

Results of tensile tests are illustrated in figure 1 and tabulated in table 1, with observations on transparency of blended material.

**Table 1: Tensile test results for 5% phase separated composites with PLA matrix**

| **Sample** | **Peak Stress (MPa)** | **Drawing Stress (MPa)** | **Strain at Break (%)** | **Modulus (GPa)** | **Clarity** |
|---|---|---|---|---|---|
| ***PLA0*** | *70.2* ± *1.0* | *n*/*a* | *12* ± *1* | *0.926* ± *0.026* | *Transparent* |
| **PHBV** | 72.0 ± 0.3 | n/a | 11 ± 1 | 1.013 ± 0.048 | Transparent |
| **h-PBS** | 68.1 ± 0.4 | 31.6 ± 0.7 | 110 ± 100 | 0.810 ± 0.031 | Transparent |
| **l-PBS** | 67.3 ± 0.0 | 29.4 ± 0.6 | 142 ± 44 | 0.711 ± 0.024 | Translucent |
| **h-PCL** | 67.9 ± 1.1 | 31.1 ± 1.0 | 75 ± 50 | 0.920 ± 0.040 | Transparent |
| **l-PCL** | 62.7 ± 1.3 | 24.4 ± 0.9 | 19 ± 8 | 0.862 ± 0.025 | Translucent |
| **PBAT** | 69.1 ± 0.7 | 31.2 ± 0.4 | 116 ± 63 | 0.723 ± 0.035 | Opaque |

### Dynamic Mechanical Thermal Analysis

DMTA tests did not reveal any significant change in the modulus of the phase separated composites compared with the pure PLA reference material. As will be noted in table 2 below, the glass transition shows only slight variation between compositions in the as-moulded condition. The effects of post-crystallisation are more significant in the composite specimens; the retention of modulus above transition is much higher. As might be expected, post crystallisation reduced the drop in modulus over the glass transition from in excess of two orders of magnitude, to little over one order of magnitude.

**Table 2: Glass transition and modulus above transition as determined by DMTA**

| **Sample** | **Tg as moulded (°C ± 0.2)** | **Tg post-crystallised (°C ± 0.2)** | **Modulus at 85°C as moulded (MPa ± 0.1)** | **Modulus at 85°C post-crystallised (MPa ± 0.1)** |
|---|---|---|---|---|
| ***PLA0*** | *46.9* | *49.1* | *6.8* | *38.5* |
| **PHBV** | 45.7 | 50.4 | 6.8 | 34.0 |
| **h**-**PBS** | 45.7 | 50.3 | 6.8 | 40.3 |
| **l-PBS** | 46.9 | 50.8 | 6.8 | 40.3 |
| **h-PCL** | 47.0 | 50.7 | 6.8 | 42.5 |
| **l-PCL** | 46.4 | 50.8 | 6.8 | 38.3 |
| **PBAT** | 47.5 | 50.9 | 6.8 | 60.2 |

### Melt Flow Rate

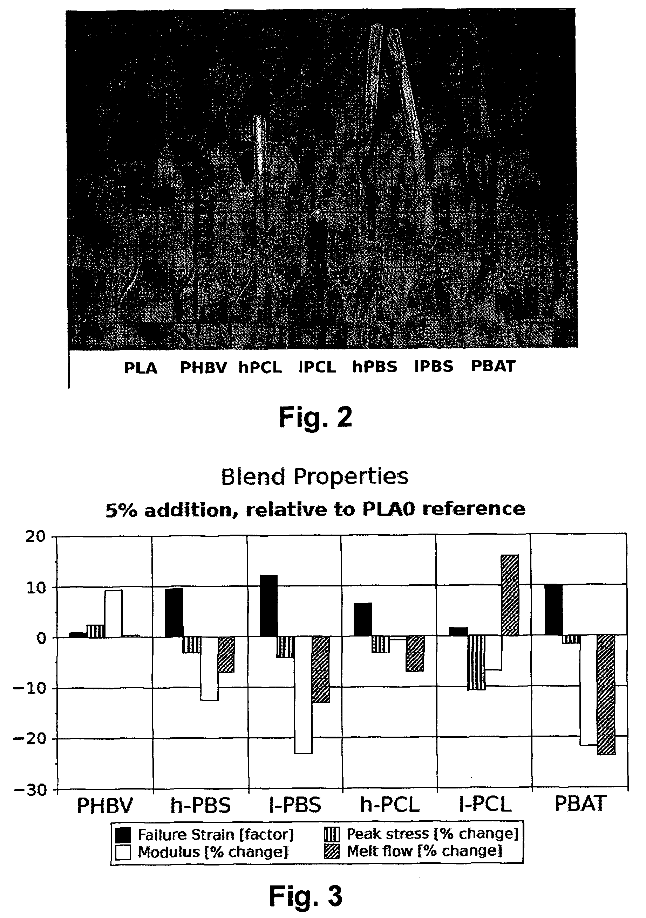

The effects of a second phase on melt flow are illustrated in figure 2 and tabulated in table 3. The introduction of a second phase effectively acted in the same manner as a particulate loading, increasing the overall viscosity of the system (therefore lowering the melt flow rate). One exception was found in the low molecular weight PCL, which significantly increased MFR; this implies decreased bulk viscosity. A summary of the mechanical and thermal test results are illustrated in figure 3.

**Table 3: Melt flow characteristics (converted to estimated MFR)**

| **Sample** | **Calculated MFR (2.16kg)** |
|---|---|
| PLA0 | 4.18 ± 0.10 |
| PHBV | 4.20 ± 0.05 |
| h-PBS | 3.89 ± 0.18 |
| l-PBS | 3.63 ± 0.04 |
| h-PCL | 3.89 ± 0.18 |
| l-PCL | 4.85 ± 0.14 |
| PBAT | 3.18 ± 0.30 |

### Phase Structure

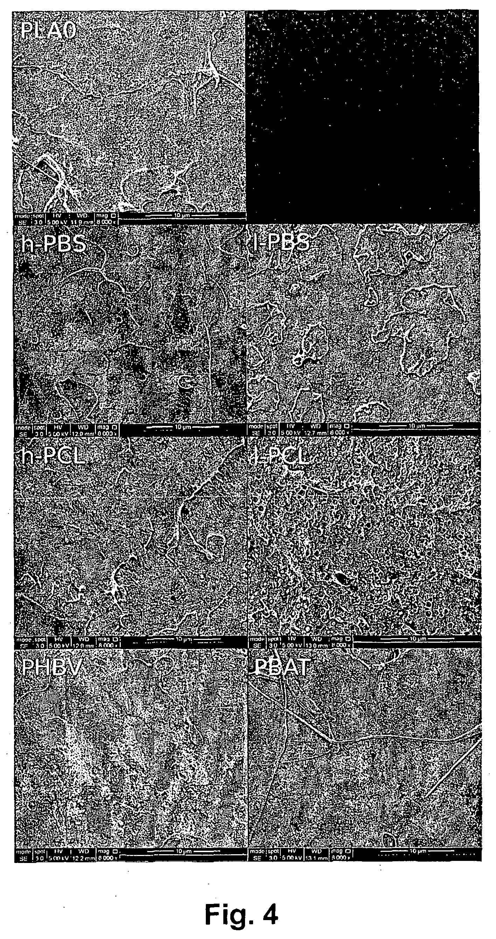

Micrographs of the cryofractured surfaces showing phase separated blends are shown in Figure 4. The blends in the left hand column show a low density of widely separated minor phase particles; this fits well with their good optical transparency recorded earlier. By comparison, the three blends which form the right hand column have a high density of small globules of the minor phase. In the case of l-PBS and PBAT these are at the limit of features which can be resolved under the gold coating and are apparent largely as a more textured surface at the magnification presented.

Table 4 shows typical globule sizes of the second phase determined from micrographs and the volume fraction. In all cases the volume fraction is significantly less than 5%. Given that the density of all six additives is within 8% of PLA, a large proportion of the minor phase is clearly dissolved in the PLA.

**Table 4: Phase separation and transparency of 2-phase blends at 5% additive**

| **Composition** | **Typical globule size** | **Volume fraction separated** | **Transparency** (10 = equals pure PLA 1 = completely opaque) |
|---|---|---|---|
| PHBV 5% | 630 nm | 0.10% | 10 |
| HPBS 5% | 350 nm | 0.01% | 9 |
| LPBS 5% | 310 nm | 2.55% | 2 |
| HPCL 5% | 590 nm | 0.03% | 9 |
| LPCL 5% | 240 nm | 0.44% | 5 |
| PBAT 5% | 280 nm | 2.37% | 1 |

### Binary Blend Effects

All the binary polymer blends examined were found to form polymer-polymer composites with a low volume fraction of the minor phase. In all cases the composites exhibited improved elongation at break which may be attributed to combined effects of plasticisation and rubber toughening due to the minor phase globules whose glass transition points are significantly below room temperature. It is probable that a degree of control may be exerted over the dissolved proportion of the minor phase, by varying the processing temperature and dwell time.

With the exception of PHBV as a minor phase, the modulus and strength of the composites is lower than that of pure PLA. Since PLA has very high modulus and strength compared with other commodity thermoplastics, at room temperature, this is of little concern for many applications.

It is particularly interesting to contrast the behaviour of the low molecular weight PCL. Here the increase in elongation at break is relatively trivial, but the MFR has been significantly increased. The micrograph of cryofractured surface shows that the minor phase globules are smaller than the cavities in which they sit, indicating considerable mismatch in thermal expansion. This would suggest the l-PCL additive has a much lower melt density. It is proposed that since it is less readily miscible than other additives, the very low density and viscosity of the l-PCL allows a lubricant effect which dominates the increase in bulk viscosity which might be expected with the addition of any dispersed phase in the melt.

The polyesters blended with PLA are all readily biodegradable thermoplastics and once blended with PLA form phase separated composites. Limited solubility of the minor phase results in a dispersion of minor phase globules. The bulk material is toughened in the solid state and the effect of post crystallisation on glass transition and modulus in the high elastic regime is enhanced when compared with pure PLA.

Tensile tests (illustrated in figures 1,3, 5 to 9) were conducted at a moderately high extension rate of 50mm/minute. The mechanical results show the effect of the additives on stiffness and strength of the composite and are indicative of changes in the behaviour of the material.

A melt flow rate test was also conducted to check for any severely adverse effects on the processability of the material during moulding and the results are illustrated in figures 1 to 3, 9 and 10. Figure 4 clearly shows different levels of phase separation for the different additives. Under higher magnification it is possible to resolve a high density of much smaller second phase globules in LPBS and PBAT compositions.

Image analysis gives greater insight into the meaning of these morphologies. Table 4 shows that the highly transparent blends have very little phase separation. Logically this makes good sense, since the globules are present in only very low density, with sizes around the wavelength of visible light. The opacity of the remaining blends seems slightly surprising, since the globules are noticeably smaller than visible wavelengths, and still in relatively low density. The implication of this is that the polymer has higher crystallinity throughout.

DMA was used to examine the effects of the additive on glass transitional behaviour of the composite. A standard testing regime was employed with specimens prepared by injection moulding and aged for one week in ambient conditions, then tested in dual cantilever loading at 3 frequencies.

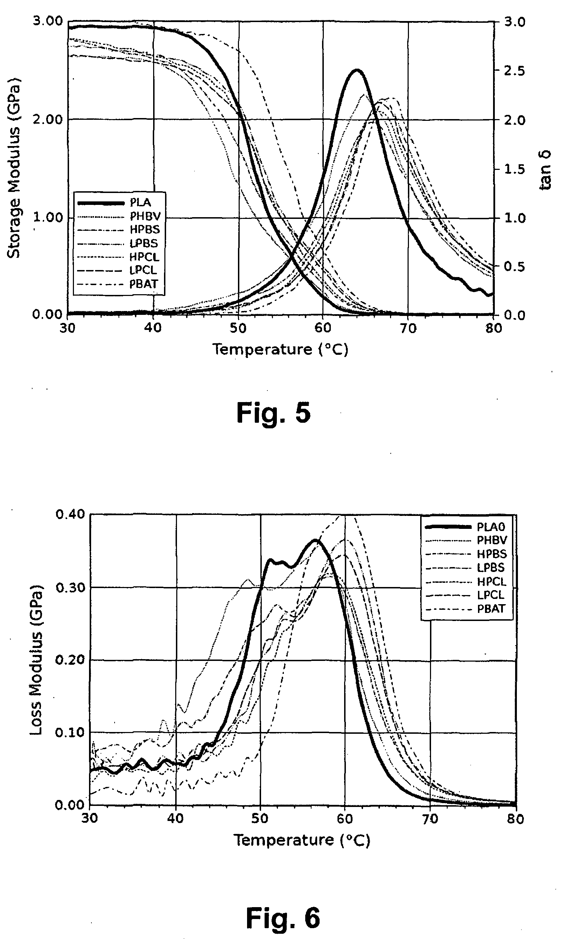

This confirmed that the polymer-polymer composites produced by blending had commensurate thermal performance with the pure PLA. Key features to note from figures 5 and 6 include:
- The storage moduli confirm that the onset of transition is largely unaffected, but PHBV has depressed it by 2 °C, while PBAT has raised it by 5 °C.
- The peaks in tan δ traces indicate that the primary transition point has been raised by up to 5°C by the additives.
- The loss modulus shows a split peak, even in pure PLA implying that two conformations are present. These peaks are generally broadened in the composites, suggesting that the minor component (the dissolved polyester additive) is plasticising the major component PLA.
- The higher temperature peak in loss modulus becomes more dominant with most additives and is shifted up in temperature. For PBAT this is particularly strong, the second, lower peak having almost disappeared.

DMA results indicated improved thermal performance in the 2-phase polymer-polymer nanocomposites over pure PLA. The traces in figure 5 would generally be considered the usual way of examining the data, but in seeking to verify offset points for glass transition behaviour, it became apparent that crystallisation started to occur shortly above the glass transition. Literature confirms that this would be expected in PLA, but has not been observed in this manner before.

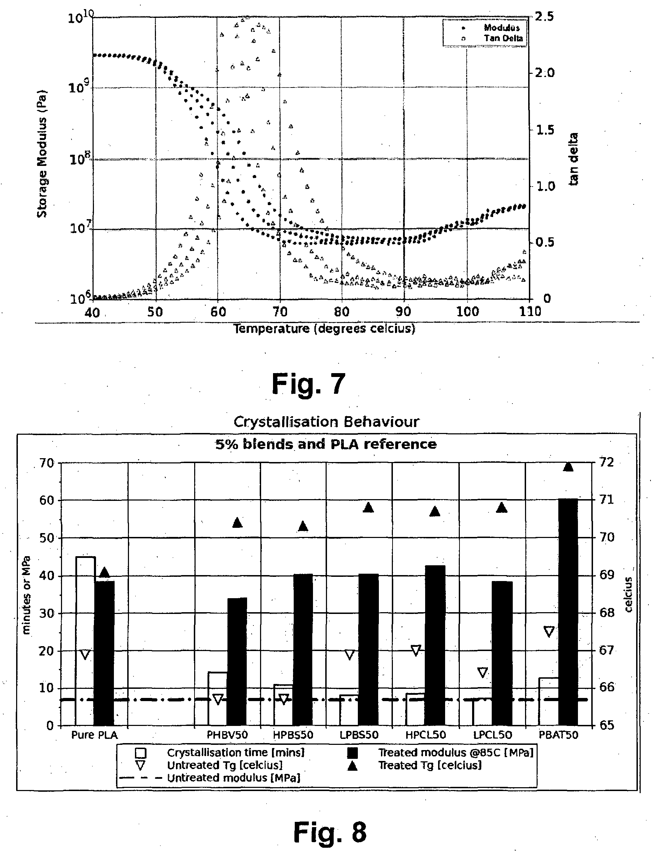

Viewing a trace for pure PLA in logarithmic scale, it was noted that the storage modulus increases again just after transition, as seen in figure 7. It is to be noted that this is data for 3 frequencies, indicating that the glass transition is time dependent, but the subsequent stiffening is not. Accordingly this provides confirmation that the phase change observation is crystallisation. It is unusual that the physical manifestation of this phenomenon is observable in the stiffness from about 90 °C, yet tan δ (of figure 5) shows nothing until a sharper peak around 110 °C. The tan δ trace of figure 5 is in closer agreement with DSC (a standard method of determining crystallisation point).

Referring to figure 8, and examining the data of all the test blend specimens in this manner, it appeared that certain blends stiffened more rapidly than others. A series of isothermal tests were conducted to examine the difference in crystallisation rate. The different binary blend specimens were then re-tested in the usual manner, revealing that crystallisation significantly improves the stiffness and thermal stability. Crystal melt point was observed around 140 °C, suggesting that a deliberately crystallised material might well retain adequate handling strength even in contact with boiling water.

Relative to unblended PLA, the crystallisation rate at 85 °C is increased by a factor of eight, and the hot stiffness magnified by an order of magnitude. There are two main implications of this:
- care must be taken to achieve adequately rapid cooling and reheating of the performs;
- the blends exhibit good potential for use as thermoplastics for re-useable consumer products such as bottles and in particular water cooler bottles amounts other products.

### Ternary Blends

Given the surprising effect of l-PLC in improving melt flow rate, ternary phase blends were investigated by adding an additional third component h-PBS, which gave the best improvement in toughness while retaining transparency. It was proposed that this could give better processability and toughness, as well as strong patentability, in one family of blends.

Since the very low molecular weight PCL may be inconvenient for compounding at a commercial scale, a slightly higher molecular weight product was also tested, which can be supplied as moulding chip. The affect of addition of this third phase component was evaluated by the same tensile and melt flow analysis described with reference to the binary blends. Although transparency is adversely affected with total additions much above 5%, it is believed that this would be tolerable up to 10% or even higher total additive level.

Using the same chemicals and testing analysis employed for the two component systems, the three phase blends investigated were:
1. PLA at 94% by weight with h-PBS at 5% by weight and l-PCL at 1% by weight;
2. PLA at 93% by weight with h-PBS at 5% by weight and l-PCL at 2% by weight;
3. PLA at 90% by weight with h-PBS at 5% by weight and l-PCL at 5% by weight;
4. PLA at 85% by weight with h-PBS at 5% by weight and l-PCL at 10% by weight;
5. PLA at 89% by weight with h-PBS at 10% by weight and l-PCL at 1% by weight;
6. PLA at 88% by weight with h-PBS at 10% by weight and l-PCL at 2% by weight.
7. PLA at 85% by weight with h-PBS at 10% by weight and l-PCL at 5% by weight;
8. PLA at 80% by weight with h-PBS at 10% by weight and l-PCL at 10% by weight;

### Ternary Blends Effects

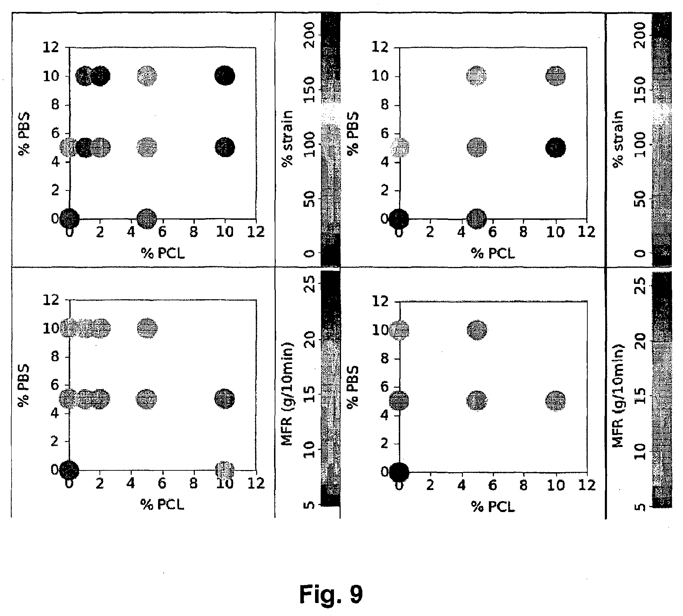

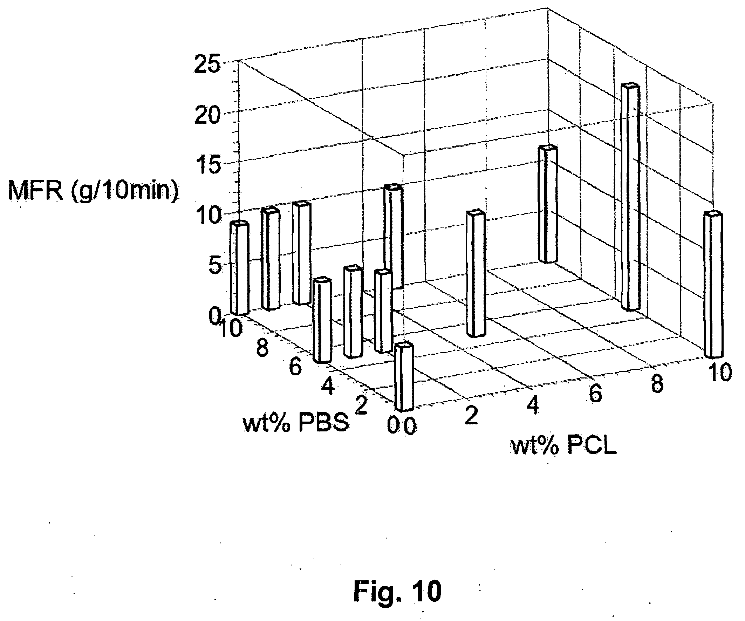

From figure 9, it can be seen that higher l-PCL addition adversely affects toughening, and that the higher molecular weight l-PCL is less effective at improving melt flow. However, from figure 9 and particularly figure 10, it is to be noted that some synergy is achieved in melt flow with 5% h-PBS and above 5% l-PCL (through to 10% l-PCL as confirmed by the results but possibly even higher by extrapolation). At and around these component concentrations the improvement in melt flow is much greater. This surprising and advantageous effect may be due to the h-PBS being more readily soluble and increasing the proportion of l-PCL which remains phase separated.

Preliminary results from first attempts at preform production have confirmed that it is necessary to pre-blend the additives with the PLA. In particular, good blending is important to the processability of the material in injection stretch blow moulding (ISBM) processes. The crystallisation behaviour of the polymer-polymer nanocomposites developed will also be beneficial in other applications. Additionally, the freshly moulded material has a higher heat deformation resistance than pure PLA and preliminary tests indicate that if it were to be deliberately crystallised, an acceptable strength level could be retained up to 140 °C. In summary, toughening can be achieved either in a phase separated polymer-polymer composite or by the plasticising effect of a dissolved second phase, but normal compounding operations result in a hybrid of these two effects.

According to further testing, the moulded preforms are configurable to exhibit a strictly finite and desired shelf-life when produced for example by bottle blowing processes. Additionally, ageing effects in contact with chemicals do not appear to affect the physical, mechanical and chemical properties so as to change the toughness, predetermined shelf-life or degradation rate of the moulded articles. Accordingly the present blend is suitable for use in the manufacture of degradable, and in particular compostable, bottles and containers for chemicals and packaging and containers in direct contact with foodstuffs and beverages. Heat resistant products (for example re-useable plastic plates, cups and cutlery) are also achievable using the present blends due, *inter alia*, to the increased rate of crystallisation and the resulting hot stiffness of the blend relative to unblended PLA.

## Claims

1. A biodegradable polymer blend comprising:
not less than 70% by weight of polylactic acid;
between 0.5% to 15% by weight of a first polyester having an average molecular weight of not more than 40,000 and a melt flow rate of greater than 7g/10 mins as determined by the method described on page 11 of the present description with 2.16kg at 80°C wherein the first polyester comprises polycaprolactone (PCL) or a linear polyhydroxy alkanoate (PHA); and
between 0.5% to 15% by weight of a second polyester having an average molecular weight greater than that of the first polyester and a melt flow rate less than the first polyester wherein the second polyester comprises:
• polybutylene succinate (PBS);
• polycaprolactone (PCL);
• polybutylene succinate adipate (PBSA);
• polybutylene adipate (PBA); or
• polybutylene adipate terephthalate (PBAT).

2. The blend as claimed in claim 1 comprising not less than 85% by weight of polylactic acid.

3. The blend as claimed in claim 1 comprising not less than 90% by weight of the polylactic acid.

4. The blend as claimed in any preceding claim comprising between 3% to 7% by weight of the first polyester.

5. The blend as claimed in any preceding claim comprising between 3% to 7% by weight of the second polyester.

6. The blend as claimed in any preceding claim wherein the first polyester has an average molecular weight of not more than 35,000.

7. The blend as claimed in any preceding claim wherein the second polyester has an average molecular weight of not less than 50,000.

8. The blend as claimed in any preceding claim comprising a melt temperature in the range 180°C to 220°C.

9. A biodegradable polymer blend comprising:
not less than 70% by weight of polylactic acid;
between 0.5% to 15% by weight of a first polyester having a melt flow rate of greater than 7g/10 mins with 2.16kg at 80°C wherein the first polyester comprises polycaprolactone (PCL) or a linear polyhydroxy alkanoate (PHA); and
between 0.5% to 15 % by weight of a second polyester having an average molecular weight greater than the average molecular weight of the first polyester and a melt flow rate less than the first polyester wherein the second polyester comprises:
• polybutylene succinate (PBS);
• polycaprolactone (PCL);
• polybutylene succinate adipate (PBSA);
• polybutylene adipate (PBA); or
• polybutylene adipate terephthalate (PBAT).

10. An article comprising a polymer blend as claimed in any preceding claim.

11. The article as claimed in claim 10 being anyone of the following:
• a bottle;
• a container for food stuffs or beverages;
• a cap, lid, or spray head of a bottle or container;
• a sheet like article being a film, a substantially flexible or rigid planar film, a film sleeve, a document wallet, a packaging film or a sheet.

12. A method of manufacturing a biodegradable polymer blend comprising:
providing not less than 75% by weight of polylactic acid;
blending between 0.5% to 15% by weight of a first polyester having an average molecular weight of not more than 40,000 and a melt flow rate of greater than 7g/10 mins with 2.16kg at 80°C with the polylactic acid wherein the first polyester comprises polycaprolactone (PCL) or a linear polyhydroxy alkanoate (PHA);
blending between 0.5% to 15% by weight of a second polyester having an average molecular weight greater than that of the first polyester and a melt flow rate less than the first polyester with the polylactic acid and the first polyester wherein the second polyester comprises:
• polybutylene succinate (PBS);
• polycaprolactone (PCL);
• polybutylene succinate adipate (PBSA);
• polybutylene adipate (PBA); or
• polybutylene adipate terephthalate (PBAT).

13. A method of manufacturing a biodegradable article from the polymer blend according to any one of claims 1 to 9 comprising shaping the blend into the article by any one of the following moulding processes:
• injection moulding;
• compression moulding;
• blow moulding;
• thermal forming;
• vacuum forming;
• extrusion moulding;
• calendaring;
• a polymer draw process.

## Patentansprüche

1. Biologisch abbaubare Polymermischung, umfassend:
nicht weniger als 70 Gew.-% Polymilchsäure;
zwischen 0,5 bis 15 Gew.-% eines ersten Polyesters, welcher ein mittleres Molekulargewicht von nicht mehr als 40.000 und einen Schmelzflussindex von größer als 7 g/10 min hat, wie mit der Methode beschrieben auf Seite 11 der vorliegenden Beschreibung bestimmt wird, mit 2,16 kg bei 80°C, wobei der erste Polyester Polycaprolacton (PCL) oder ein lineares Polyhydroxyalkanoat (PHA) umfasst; und
zwischen 0,5 bis 15 Gew.-% eines zweiten Polyesters, welcher ein mittleres Molekulargewicht größer als das des ersten Polyesters und einen Schmelzflussindex kleiner als der des ersten Polyesters hat, wobei der zweite Polyester umfasst:
• Polybutylensuccinat (PBS);
• Polycaprolacton (PCL);
• Polybutylensuccinatadipat (PBSA);
• Polybutylenadipat (PBA); oder
• Polybutylenadipatterephthalat (PBAT).

2. Mischung, wie in Anspruch 1 beansprucht, welche nicht weniger als 85 Gew.-% Polymilchsäure umfasst.

3. Mischung, wie in Anspruch 1 beansprucht, welche nicht weniger als 90 Gew.-% der Polymilchsäure umfasst.

4. Mischung, wie in einem beliebigen vorangegangenen Anspruch beansprucht, welche zwischen 3 bis 7 Gew.-% des ersten Polyesters umfasst.

5. Mischung, wie in einem beliebigen vorangegangenen Anspruch beansprucht, welche zwischen 3 bis 7 Gew.-% des zweiten Polyesters umfasst.

6. Mischung, wie in einem beliebigen vorangegangenen Anspruch beansprucht, wobei der erste Polyester ein mittleres Molekulargewicht von nicht mehr als 35.000 hat.

7. Mischung, wie in einem beliebigen vorangegangenen Anspruch beansprucht, wobei der zweite Polyester ein mittleres Molekulargewicht von nicht weniger als 50.000 hat.

8. Mischung, wie in einem beliebigen vorangegangenen Anspruch beansprucht, welche eine Schmelztemperatur in dem Bereich 180°C bis 220°C umfasst.

9. Biologisch abbaubare Polymermischung, umfassend:
nicht weniger als 70 Gew.-% Polymilchsäure;
zwischen 0,5 bis 15 Gew.-% eines ersten Polyesters, welcher einen Schmelzflussindex von größer als 7 g/10 min mit 2,16 kg bei 80°C hat, wobei der erste Polyester Polycaprolacton (PCL) oder ein lineares Polyhydroxyalkanoat (PHA) umfasst; und
zwischen 0,5 bis 15 Gew.-% eines zweiten Polyesters, welcher ein mittleres Molekulargewicht größer als das mittlere Molekulargewicht des ersten Polyesters und einen Schmelzflussindex kleiner als der des ersten Polyesters hat, wobei der zweite Polyester umfasst:
• Polybutylensuccinat (PBS);
• Polycaprolacton (PCL);
• Polybutylensuccinatadipat (PBSA);
• Polybutylenadipat (PBA); oder
• Polybutylenadipatterephthalat (PBAT).

10. Gegenstand, welcher eine Polymermischung, wie in einem beliebigen vorangegangenen Anspruch beansprucht, umfasst.

11. Gegenstand, wie in Anspruch 10 beansprucht, welcher einer der folgenden ist:
• eine Flasche;
• ein Behälter für Nahrungsmittel oder Getränke;
• eine Kappe, ein Deckel oder ein Sprühkopf einer Flasche oder eines Behälters;
• ein folienartiger Gegenstand, welcher ein Film, ein im Wesentlichen flexibler oder starrer planarer Film, ein Folienschlauch, eine Dokumententasche, ein Verpackungsfilm oder eine Folie ist.

12. Verfahren zur Herstellung einer biologisch abbaubaren Polymermischung, umfassend:
Bereitstellen von nicht weniger als 75 Gew.-% Polymilchsäure;
Mischen von 0,5 bis 15 Gew.-% eines ersten Polyesters, welcher ein mittleres Molekulargewicht von nicht mehr als 40.000 und einen Schmelzflussindex von größer als 7 g/10 min mit 2,16 kg bei 80°C hat, mit der Polymilchsäure, wobei der erste Polyester Polycaprolacton (PCL) oder ein lineares Polyhydroxyalkanoat (PHA) umfasst;
Mischen von 0,5 bis 15 Gew.-% eines zweiten Polyesters, welcher ein mittleres Molekulargewicht größer als das des ersten Polyesters und einen Schmelzflussindex kleiner als der des ersten Polyesters hat, mit der Polymilchsäure und dem ersten Polyester, wobei der zweite Polyester umfasst:
• Polybutylensuccinat (PBS);
• Polycaprolacton (PCL);
• Polybutylensuccinatadipat (PBSA);
• Polybutylenadipat (PBA); oder
• Polybutylenadipatterephthalat (PBAT).

13. Verfahren zur Herstellung eines biologisch abbaubaren Gegenstandes aus der Polymermischung gemäß einem der Ansprüche 1 bis 9, welches das Formen der Mischung in den Gegenstand durch irgendeins der folgenden Formverfahren umfasst:
• Spritzgießen;
• Formpressen;
• Blasformen;
• thermisches Formen;
• Vakuumformen;
• Extrusion;
• Kalandrieren;
• ein Polymerziehverfahren.

## Revendications

1. Mélange polymère biodégradable comprenant :
pas moins de 70 % en poids d'acide polylactique ;
de 0,5 % à 15 % en poids d'un premier polyester ayant une masse moléculaire moyenne pas supérieure à 40 000 et un indice de fluidité supérieur à 7 g/10 minutes, tel que déterminé par le procédé décrit à la page 11 de la présente description, avec 2,16 kg à 80 °C, dans lequel le premier polyester comprend du polycaprolactone (PCL) ou un polyhydroxy alcanoate linéaire (PHA) ; et
de 0,5 % à 15 % en poids d'un second polyester ayant une masse moléculaire moyenne supérieure à celle du premier polyester et un indice de fluidité inférieur à celui du premier polyester, dans lequel le second polyester comprend :
- du succinate de polybutylène (PBS) ;
- du polycaprolactone (PCL) ;
- du succinate adipate de polybutylène (PBSA) ;
- de l'adipate de polybutylène (PBA) ; ou
- de l'adipate téréphtalate de polybutylène (PBAT).

2. Mélange selon la revendication 1, ne comprenant pas moins de 85 % en poids d'acide polylactique.

3. Mélange selon la revendication 1, ne comprenant pas moins de 90 % en poids de l'acide polylactique.

4. Mélange selon l'une quelconque des revendications précédentes, comprenant de 3 % à 7 % en poids du premier polyester.

5. Mélange selon l'une quelconque des revendications précédentes, comprenant de 3 % à 7 % en poids du second polyester.

6. Mélange selon l'une quelconque des revendications précédentes, dans lequel le premier polyester a une masse moléculaire moyenne pas supérieure à 35 000.

7. Mélange selon l'une quelconque des revendications précédentes, dans lequel le second polyester a une masse moléculaire moyenne pas inférieure à 50 000.

8. Mélange selon l'une quelconque des revendications précédentes, comprenant une température de fusion dans la plage de 180 °C à 220 °C.

9. Mélange polymère biodégradable comprenant :
pas moins de 70 % en poids d'acide polylactique ;
de 0,5 % à 15 % en poids d'un premier polyester ayant un indice de fluidité supérieur à 7 g/10 minutes avec 2,16 kg à 80 °C, dans lequel le premier polyester comprend du polycaprolactone (PCL) ou un polyhydroxy alcanoate linéaire (PHA) ; et
de 0,5 % à 15 % en poids d'un second polyester ayant une masse moléculaire moyenne supérieure à la masse moléculaire moyenne du premier polyester et un indice de fluidité inférieur à celui du premier polyester, dans lequel le second polyester comprend :
- du succinate de polybutylène (PBS) ;
- du polycaprolactone (PCL) ;
- du succinate adipate de polybutylène (PBSA) ;
- de l'adipate de polybutylène (PBA) ; ou
- de l'adipate téréphtalate de polybutylène (PBAT).

10. Article comprenant un mélange polymère selon l'une quelconque des revendications précédentes.

11. Article selon la revendication 10, étant l'un quelconque de :
- une bouteille ;
- un récipient pour produits alimentaires ou boissons ;
- un capuchon, un couvercle ou une tête de pulvérisation pour une bouteille ou un récipient ;
- un article de type feuille étant un film, un film plan sensiblement souple ou rigide, un manchon de film, un porte-documents, un film d'emballage ou une feuille.

12. Procédé de fabrication d'un mélange polymère biodégradable comprenant :
la fourniture de pas moins de 75 % en poids d'acide polylactique ;
le mélange de 0,5 % à 15 % en poids d'un premier polyester ayant une masse moléculaire moyenne pas supérieure à 40 000, et un indice de fusion supérieure à 7 g/10 minutes avec 2,16 kg à 80 °C avec l'acide polylactique, dans lequel le premier polyester comprend du polycaprolactone (PCL) ou un polyhydroxy alcanoate linéaire (PHA) ;
le mélange de 0,5 % à 0,5 % en poids d'un second polyester ayant une masse moléculaire moyenne supérieure à celle du premier polyester et un indice de fluidité inférieur à celui du premier polyester avec l'acide polylactique et le premier polymère dans lequel le second polyester comprend :
- du succinate de polybutylène (PBS) ;
- du polycaprolactone (PCL) ;
- du succinate adipate de polybutylène (PBSA) ;
- de l'adipate de polybutylène (PBA) ; ou
- de l'adipate téréphtalate de polybutylène (PBAT).

13. Procédé de fabrication d'un article biodégradable à partir du mélange polymère selon l'une quelconque des revendications 1 à 9, comprenant la mise en forme du mélange en l'article par l'un quelconque des procédés de moulage suivant :
- le moulage par injection ;
- le moulage par compression ;
- le moulage par extrusion soufflage ;
- le thermoformage ;
- le formage sous vide ;
- le moulage par extrusion ;
- le laminage ;
- un procédé d'étirage de polymère.
